(19) Europäisches Patentamt
European Patent Office
Office européen des brevets

(11) **EP 3 463 864 B1**

(12) **EUROPEAN PATENT SPECIFICATION**

(45) Date of publication and mention of the grant of the patent:
**17.02.2021 Bulletin 2021/07**

(51) Int Cl.:
***B32B 17/06*** (2006.01)

(21) Application number: **17734543.6**

(86) International application number:
**PCT/US2017/035419**

(22) Date of filing: **01.06.2017**

(87) International publication number:
**WO 2017/210412 (07.12.2017 Gazette 2017/49)**

(54) **LAMINATED GLASS STRUCTURES WITH ENHANCED THERMAL AND MOISTURE-RESISTANCE**

VERBUNDGLASSTRUKTUREN MIT VERBESSERTER WÄRME- UND FEUCHTIGKEITSBESTÄNDIGKEIT

STRUCTURES DE VERRE FEUILLETÉ AVEC UNE RÉSISTANCE AMÉLIORÉE À LA CHALEUR ET À L'HUMIDITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2016 US 201662344580 P**

(43) Date of publication of application:
**10.04.2019 Bulletin 2019/15**

(73) Proprietor: **Corning Incorporated Corning, New York 14831 (US)**

(72) Inventors:
• **JOSHI, Dhananjay**
**Painted Post**
**New York 14870 (US)**
• **PRICE, Michael William**
**Corning**
**New York 14830 (US)**
• **WEBB, James Ernest**
**Corning**
**New York 14830 (US)**
• **ZHANG, Chunhe**
**Horseheads**
**New York 14845 (US)**

(74) Representative: **Elkington and Fife LLP Prospect House 8 Pembroke Road Sevenoaks, Kent TN13 1XR (GB)**

(56) References cited:
**US-A- 4 427 743**     **US-A- 5 589 272**
**US-A1- 2014 083 490**     **US-A1- 2015 251 381**
**US-A1- 2015 367 607**

Remarks:
The file contains technical information submitted after the application was filed and not included in this specification

EP 3 463 864 B1

## Description

### FIELD

The present disclosure relates to laminated glass structures and, more particularly, to laminated glass structures and designs configured for mechanical reliability, defect resistance, moisture insensitivity, temperature insensitivity, aesthetic qualities and low manufacturing cost.

### BACKGROUND

Laminated glass structures may be used as components in the fabrication of various appliances, automobile components, architectural structures, and electronic devices, to name a few. For example, laminated glass structures may be incorporated as cover glass for various end products such as refrigerators, backsplashes, decorative glazing or televisions. Laminated glass structures can also be employed in laminated stacks for various architectural applications, decorative wall panels, panels designed for ease-of-cleaning and other laminate applications in which a thin glass surface is valued.

These laminated glass structures typically employ thin glass as a premium surface that is visually appealing, scratch resistant and easily cleanable. Owing to the optical clarity of many of these thin glasses, various aesthetic features can also be employed in the laminated structures beneath the glass. In these laminated glass structures, the substrate upon which the thin glass sits provides structural rigidity, decoration, and a mechanism for mounting to other structures (e.g., walls).

Unfortunately, conventional laminated glass structures can be prone to some problems during shipment and in use within their application environments. Typically, the laminated glass structures employ substrate materials that can be particularly sensitive to changes in temperature and moisture, both of which can result in expansion of the substrate relative to the adhesives and glass employed in the laminated glass structures. Further, the relative expansion of the substrate from temperature and/or moisture changes can produce added tensile stress in the glass. Some of this added tensile stress can be located at the edges of the glass, which can be particularly susceptible to tensile stresses. Further, these effects can be exacerbated in conventional laminated glass structures with a relatively large surface area, e.g., a surface area greater than or equal to 1 $m^2$. Conventional laminated glass structures can thus be prone to premature failure during shipment and/or use from temperature and/or moisture-related changes.

Accordingly, there is a need for laminated glass structures and designs with one or more of the following attributes: mechanical reliability, defect resistance, moisture insensitivity, temperature insensitivity, aesthetic qualities and low manufacturing cost.

US 4427743 A relates to a laminated panel composed of a plastic sheet and a glass sheet bonded to each other through an adhesive layer.

### SUMMARY

According to a first aspect of the invention, a laminated glass structure is provided that includes a substrate, a flexible glass sheet, a buffer layer, a first adhesive and a second adhesive. The substrate has a thickness from about 2.5 mm to about 50 mm and primary surfaces. The buffer layer has a thickness from about 0.1 mm to about 2.5 mm and is laminated to the substrate with the first adhesive. The flexible glass sheet has a thickness of no greater than 0.3 mm and is laminated to the buffer layer with the second adhesive. Further, the buffer layer is characterized by an elastic modulus of at least 70 GPa and a coefficient of thermal expansion between about 4 and 25 ppm*°C$^{-1}$. Further, the buffer layer comprises a metal alloy; or the substrate comprises a material selected from the group consisting of a polymer, a wood, a low pressure laminate (LPL), a high pressure laminate (HPL), a melamine-containing laminate, a particle-reinforced board, a fiber-reinforced board, and a medium density fiberboard (MDF).

According to an aspect of the disclosure, the substrate is characterized by an environmental strain that is at least two times greater than an environmental strain of the glass sheet, the environmental strain measured from -40°C to +60°C and from 20% to 80% relative humidity in a non-laminated condition.

According to a further aspect of the disclosure, the buffer layer is further characterized by about zero expansion from exposure to 20% to 80% relative humidity at +20°C.

According to the first aspect of the invention, the buffer layer may be further characterized by an elastic modulus of at least 150 GPa, a thickness from about 0.5 mm to about 1.5 mm and a coefficient of thermal expansion between about 10 and 20 ppm*°C$^{-1}$.

According to a further aspect of the disclosure, the substrate is characterized by an environmental strain of at least 0.2%, the environmental strain measured from -40°C to +60°C and from 20% to 80% relative humidity in a non-laminated condition.

According to the first aspect of the invention, the buffer layer may comprise an upper buffer layer and a lower buffer layer.

According to a second aspect of the invention, a laminated glass structure that includes a substrate, a flexible glass sheet, a buffer layer, a first adhesive and a second adhesive. The substrate has a thickness from about 2.5 mm to about 50 mm and primary surfaces. The buffer layer has a thickness from about 0.1 mm to about 2.5 mm and is laminated to the substrate with the first adhesive. The flexible glass sheet has a thickness of no greater than 0.3 mm and is laminated to the substrate with the second adhesive. Further, the buffer layer is characterized by an elastic modulus of at least 70 GPa and a coefficient of thermal expansion between about 4 and 25 ppm*°C$^{-1}$.

According to an aspect of the disclosure, the substrate is characterized by an environmental strain that is at least two times greater than an environmental strain of the glass sheet, the environmental strain measured from -40°C to +60°C and from 20% to 80% relative humidity in a non-laminated condition.

According to an aspect of the disclosure the buffer layer is further characterized by about zero expansion from exposure to 20% to 80% relative humidity at +20°C.

According to an aspect of the disclosure, the buffer layer is further characterized by an elastic modulus of at least 150 GPa, a thickness from about 0.5 mm to about 1.5 mm and a coefficient of thermal expansion between about 10 and 20 ppm*°C$^{-1}$.

According to a further aspect of the disclosure, the buffer layer comprises a metal alloy.

According to a further aspect of the disclosure, the substrate is characterized by an environmental strain of at least 0.2%, the environmental strain measured from -40°C to +60°C and from 20% to 80% relative humidity in a non-laminated condition.

According to the second aspect of the invention, the substrate may comprise a material selected from the group consisting of a polymer, a wood, a low pressure laminate (LPL), a high pressure laminate (HPL), a melamine-containing laminate, a particle-reinforced board, a fiber-reinforced board, and a medium density fiberboard (MDF).

According to a third aspect of the invention, a laminated glass structure is provided that includes a substrate, a flexible glass sheet, an upper buffer layer, a lower buffer layer, a first adhesive, a second adhesive and a third adhesive. The substrate has a thickness from about 2.5 mm to about 50 mm, an upper primary surface, and a lower primary surface. The upper buffer layer is laminated to the upper primary surface of the substrate with the first adhesive. The flexible glass sheet has a thickness of no greater than 0.3 mm and is laminated to the upper buffer layer with the second adhesive. The lower buffer layer is laminated to the lower primary surface of the substrate with the third adhesive. Further, the buffer layers have a total thickness from about 0.1 mm to about 2.5 mm, and each buffer layer is further characterized by an elastic modulus of at least 70 GPa and a coefficient of thermal expansion between about 4 and 25 ppm*°C$^{-1}$.

According to an aspect of the disclosure, the substrate is characterized by an environmental strain that is at least two times greater than an environmental strain of the glass sheet, the environmental strain measured from -40°C to +60°C and from 20% to 80% relative humidity in a non-laminated condition.

According to a further aspect of the disclosure, each buffer layer is further characterized by about zero expansion from exposure to 20% to 80% relative humidity at +20°C.

According to another aspect of the disclosure, each buffer layer is further characterized by an elastic modulus of at least 150 GPa and a coefficient of thermal expansion between about 10 and 20 ppm*°C$^{-1}$, and further wherein the buffer layers have a total thickness from about 0.5 mm to about 1.5 mm.

According to a further aspect of the disclosure, each buffer layer comprises a metal alloy.

According to the third aspect of the invention, the buffer layers may have substantially the same composition and thicknesses.

According to the third aspect of the invention, the buffer layers may have at least one of different compositions and different thicknesses.

According to an aspect of the disclosure, the substrate is characterized by an environmental strain of at least 0.2%, the environmental strain measured from -40°C to +60°C and from 20% to 80% relative humidity in a non-laminated condition.

According to a further aspect of the disclosure, the substrate comprises a material selected from the group consisting of a polymer, a wood, a low pressure laminate (LPL), a high pressure laminate (HPL), a melamine-containing laminate, a particle-reinforced board, a fiber-reinforced board, and a medium density fiberboard (MDF).


**BRIEF DESCRIPTION OF THE DRAWINGS**

These and other features, aspects and advantages of the present disclosure are better understood when the following detailed description of the disclosure is read with reference to the accompanying drawings, in which:

FIG. 1 illustrates a cross-sectional view of a conventional laminated glass structure;

FIG. 1A illustrates a top view of the laminated glass structure depicted in FIG. 1;

FIG. 1B illustrates the stress in the y-direction of the glass along its short axis and through its center upon expansion of the substrate in the laminated glass structure depicted in FIG. 1;

FIG. 1C illustrates the stress in the x-direction of the glass along its short axis and through its center upon expansion of the substrate of the laminated glass structure depicted in FIG. 1;

FIG. 2 illustrates a cross-sectional view of an embodiment of a laminated glass structure with a buffer layer laminated to the substrate and a flexible glass sheet laminated to the buffer layer in accordance with aspects of the disclosure;

FIG. 3 illustrates a cross-sectional view of an embodiment of a laminated glass structure with a buffer layer laminated to the substrate and a flexible glass sheet laminated to the substrate in accordance with aspects of the disclosure;

FIG. 4 illustrates a cross-sectional view of an embodiment of a laminated glass structure with buffer layers laminated to the substrate and a flexible glass sheet laminated to one of the buffer layers in accordance with aspects of the disclosure;

FIG. 5 illustrates a cross-sectional view of an embodiment of a laminated glass structure that includes a flexible glass sheet laminated to a high pressure laminate (HPL) with a plurality of buffer foils in accordance with aspects of the disclosure; and

FIG. 6 illustrates the results of a finite element model showing the stress in a flexible glass sheet of a laminated glass structure as a function of buffer layer thickness and elastic modulus in accordance with aspects of the disclosure.

## DETAILED DESCRIPTION

Disclosed herein are various laminated glass structures and designs with mechanical reliability, defect resistance, moisture insensitivity, temperature insensitivity, aesthetic qualities and/or low manufacturing cost. Certain of these structures and designs have all or some of these attributes. In general, these laminated glass structures include a flexible glass sheet, a substrate, a buffer layer, layers or foils, and adhesives. By tailoring the thickness and/or the elastic modulus of the buffer layer, layers or foils to the material properties and thicknesses of the glass sheet and substrate, the glass sheets in these laminated glass structures experience significantly lower tensile stresses upon expansion of the substrate from thermal- and/or moisture-related environmental changes. Accordingly, the laminated glass structures and designs of the disclosure possess high mechanical reliability, defect resistance, moisture insensitivity, temperature insensitivity, aesthetic qualities and low manufacturing cost, particularly relative to conventional glass laminates.

The laminated glass structures, designs and design approaches described herein offer several advantages over conventional glass laminates. For instance, the laminated glass structures of the disclosure offer enhanced mechanical reliability, particularly in the glass sheet, preventing it from breakage and/or premature failure from various temperature- and moisture-related environmental conditions. These laminated glass structures also experience less out-of-plane deflection from exposure to temperature- and moisture-related changes. With less dimensional sensitivity to these conditions, the laminated glass structures can be employed in more applications, many of which require tight dimensional tolerances upon exposure to various environmental conditions. Another advantage of these laminated glass structures and designs is that they can facilitate the use of lower cost substrate materials that would otherwise result in excessive tensile stresses in the glass upon exposure to temperature and moisture changes. A further advantage of these laminated glass structures and designs is that they can facilitate the use of certain high-expansion substrate materials (e.g., lower cost substrate materials with relatively low moisture resistance) that offer other advantages, including low weight and/or increased flexibility in incorporating these structures within certain application environments, e.g., architectural applications. One additional advantage of these laminated glass structures is that they enable the use of thin glass with thicknesses that may not otherwise be feasible in conventional laminates. A key benefit in driving the thickness of the glass sheet downward is that the use of thin glass allows for more flexibility in on-site processing of the laminated glass structures using tools and techniques suitable for low elastic modulus building and architectural materials, e.g., wood, fiber-board and the like. Still further, the thickness of the buffer layer, layers or foils of these laminated glass structures can be adjusted to make these features visible or virtually invisible, depending on the desired aesthetics of the intended application for a given laminated glass structure. Finally, the thickness of the buffer layer, layers or foils can be adjusted to allow for lower cost manufacturing of these laminated glass structures, particularly processes associated with machining and forming edges in these structures.

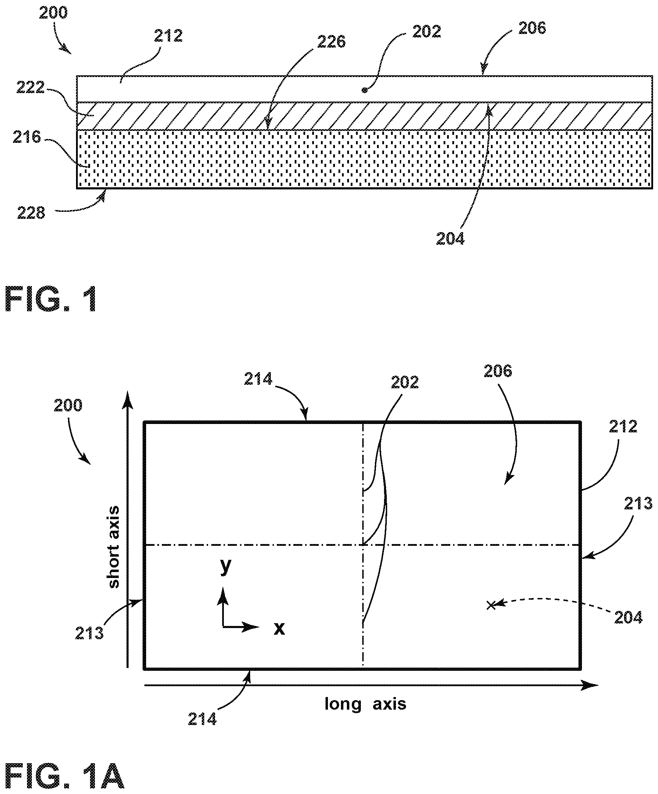

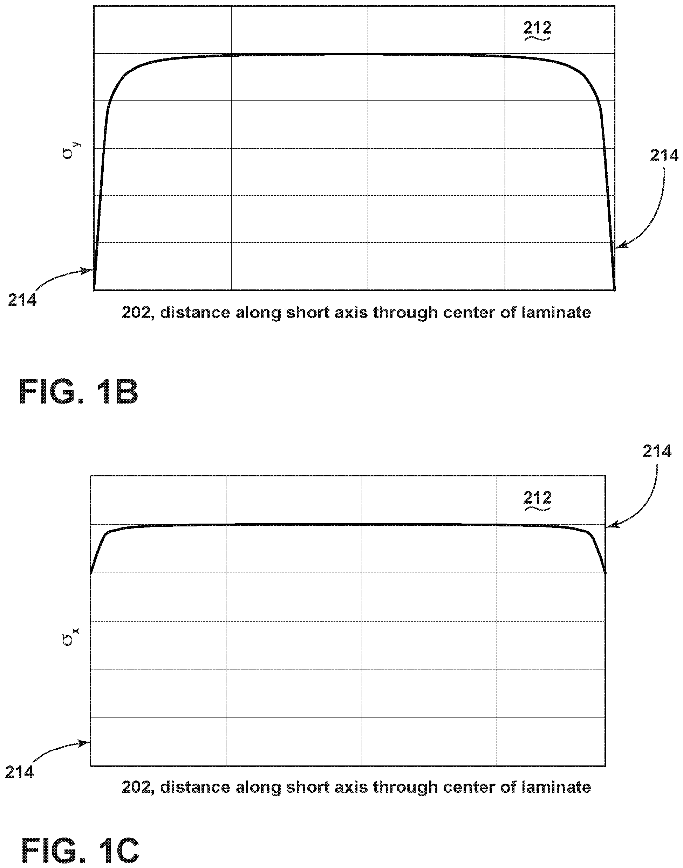

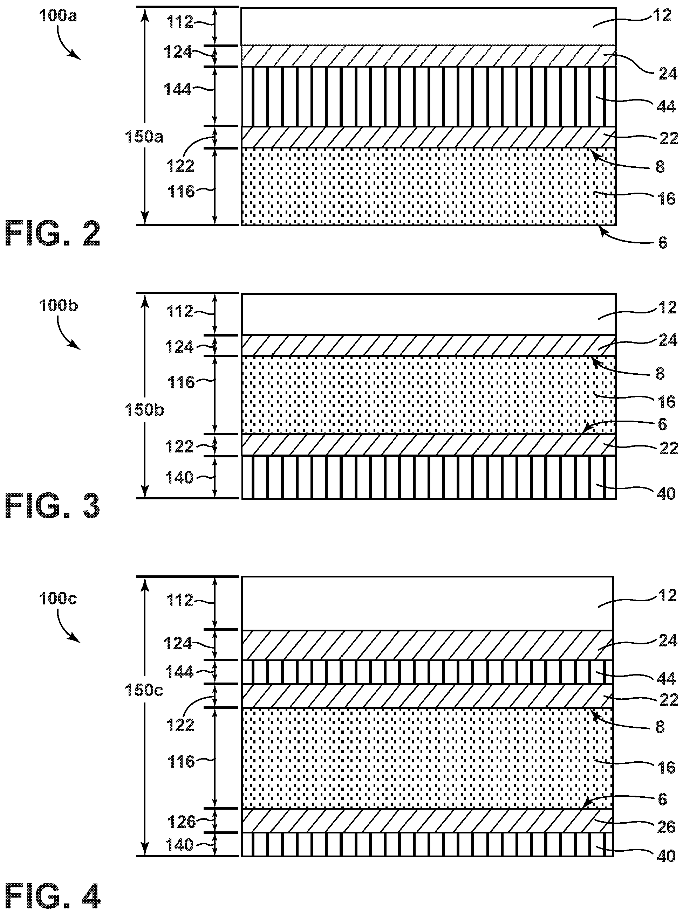

Referring to FIG. 1, a conventional laminated glass structure is depicted to illustrate the development of relatively high tensile stresses in the glass sheet associated with expansion of the substrate through temperature and/or moisture changes. The laminated glass structures of the invention (see, e.g., laminated glass structures 100a, 100b, 100c depicted in FIGS. 2, 3 and 4), however, can reduce these stresses under the same temperature and/or moisture changes. As shown in FIG. 1, a conventional laminated glass structure 200 can include a glass sheet 212, adhesive 222 and a substrate 216, typically a non-glass substrate. The glass sheet 212 has an upper primary surface 206 and a lower primary surface 204. The lower primary surface 204 of the glass sheet 212 is laminated to an upper primary surface 226 of the non-glass substrate 216 by the adhesive 222. Further, the non-glass substrate 216 is shown with a lower primary surface 228, on the non-glass side of the conventional laminated glass structure 200.

Referring again to FIG. 1, at the time in which the glass sheet 212 is laminated to the upper primary surface 226 of the non-glass substrate 216 by the adhesive 222, the laminated glass structure 200 experiences zero stresses in its glass sheet as there is no expansion mismatch between these elements. With temperature and moisture changes over time, stresses can develop in the glass sheet 212 and the substrate 216 as they are connected to one another by the adhesive 222. Upon expansion of the substrate (e.g., through temperature changes and/or moisture ingress), tensile stresses can develop in the glass sheet 212. Conversely, contraction of the substrate 216 through temperature- and/or moisture-related changes results in compressive stresses within the glass sheet 212. These tensile and/or compressive stresses within the glass sheet 212 are planar in nature and can vary with location and orientation.

Referring now to FIGS. 1 and 1A, the conventional laminated glass structure 200 is depicted in a cross-sectional view and a top view, respectively. In particular, the glass structure 200 is shown as possessing long edges 214 and short edges 213. In addition, centerlines within the laminated glass structure 200 are depicted, along with long and short axes of the structure as oriented parallel to the x and y directions, respectively. Further, as shown in FIG. 1A, a centerline 202 is depicted within the center of the glass sheet 212 that bisects the long axis of the sheet and runs through the center of its thickness (see also FIG. 1). As the substrate 216 expands from moisture ingress and/or temperature-related changes, the adhesive 222 plays a significant role in how stresses are distributed throughout the glass sheet 212. At each of the edges 213, 214 of the glass sheet 212, the stresses perpendicular to that edge are zero because these edges are free edges. When moving toward the center of the glass sheet 212 from one of the edges 213, 214, the stresses in the glass sheet 212 and the substrate 216 increase in magnitude as the adhesive 222 applies a shear stress to each of these elements.

Referring to FIGS. 1, 1A and 1B, the substrate 216 can expand from environmental conditions, including moisture ingress and temperature-related changes, after the process of being laminated to the glass sheet 212 with the adhesive 222. As the substrate 216 expands, the glass sheet 212 experiences a tensile stress state and the substrate 216 experiences a compressive stress state. With respect to FIG. 1B, the glass sheet 212 of the conventional laminated glass structure 200 experiences tensile stress in the y-direction along its short axis and through its centerline 202 upon expansion of the substrate 216. As is evident from FIG. 1B, the stress is about zero at the edges 214 of the glass sheet 212 and climbs to a maximum level at its approximate center along the centerline 202.

Referring now to FIGS. 1, 1A and 1C, the effect of the expansion of the substrate 216 at the centerline 202 of the glass sheet 212 is more pronounced in terms of tensile stress in the x-direction. That is, as shown in FIG. 1C, the glass sheet 212 of the conventional laminated glass structure 200 experiences tensile stress in the x-direction along its short axis and through its centerline 202 upon expansion of the substrate 216. As is evident from FIG. 1C, however, the stress is non-zero at the edges 214 of the glass sheet 212 while still climbing to a maximum level at its approximate center along the centerline 202. While the tensile stress at the edges 214 of the glass sheet is about 20% lower than its maximum level at the approximate center along the centerline 202, this stress is parallel to the edges 214 and presents a concern for the glass sheet 212. As edges of a glass sheet, such as glass sheet 212, typically have the lowest strength of a glass plate due to cutting and finishing-related defects, these relatively high stress levels can lead to premature failure of the glass sheet. As the stress levels in proximity to the edges 214 are also appreciably high (see FIG. 1C), these edges 214 are the most likely region to fail prematurely during shipment and application-related temperature and moisture changes experienced by the conventional laminated glass structure 200.

As noted in FIGS. 1B and 1C, expansion of the substrate 216 from environmental conditions that include moisture ingress into the substrate, and substrate temperature changes, generates heightened tensile stress levels in the glass sheet 212 of a conventional laminated glass structure 200. In certain cases, these stress levels, particularly at the edges 213, 214 (see also FIG. 1A) of the structure, exceed the edge strength of the glass sheet, as-processed by common finishing methods. Table 1 below illustrates example total and individual strain levels, $\Delta\varepsilon$, experienced by common materials employed as the substrate 216 (e.g., poly(methyl methacrylate) (PMMA), polycarbonate (PC), medium density fiberboard (MDF) and high pressure laminate (HPL)) in conventional laminated glass structures 200, as exposed to typical temperature and humidity ranges for laminated products. Table 1 also illustrates example elastic modulus values, E, for these same substrate materials.

Data for glass indicative of the glass sheet 212 is also provided in Table 1 to further demonstrate the extent to which the substrate materials expand relative to the glass sheet within a conventional laminated glass structure 200. For example, a total environmental strain, $\Delta\varepsilon$, of the glass is in the range of 0.03% to 0.09%, and the total environmental strain of MDF can reach as high as 0.25% under the same environmental conditions. Accordingly, the substrate materials employed in conventional laminated glass structures 200 can experience total strains of at least two times greater than the glass sheet employed in these same structures.

**Table 1**

| Substrate | $\Delta\varepsilon$, -40 to +60°C | $\Delta\varepsilon$, 20-80% r.h. (20°C) | Total $\Delta\varepsilon$ | E | CTE |
|---|---|---|---|---|---|
| Glass | 0.03% to 0.09% | 0 | 0.03 to 0.09% | 74 GPa | 3-9 ppm/°C |
| PMMA | 0.75% | 0.1% | 0.85% | 3.2 GPa | 75 ppm/°C |
| PC | 0.68% | Not available | 0.68% | 2.3 GPa | 68 ppm/°C |
| MDF | 0% | 0.25% | 0.25% | 2.9 GPa | 0 ppm/°C |
| HPL | 0.35% | 0.6% | 0.95% | 15 GPa | 35 ppm/°C |

As shown below in Table 2, maximum tensile stress levels at the edges 213, 214 of glass sheets 212 within conventional laminated glass structures 200 can be estimated using the data in Table 1. More particularly, the maximum, edgewise tensile stress levels in the glass sheet 212 listed in Table 2 corresponding to particular substrate materials 216 are based on the maximum amount of expansion, Total $\Delta\varepsilon$, observed in these substrates for the listed moisture- and temperature-related environmental conditions (i.e., from -40 to 60°C and from 20 to 80% relative humidity at 20°C). Further, the stress levels in the glass sheet 212 are estimated with the assumption that the conventional laminated glass structure 200 had been laminated at the low end of these environmental conditions (i.e., at -40°C and 20% relative humidity). Hence, the maximum stress levels listed in Table 2 are at the edges 213, 214 of glass sheets 212 that are laminated to substrates 216 which experience the maximum amount of possible expansion as the conditions are changed from -40 to 60°C and from 20 to 80% relative humidity. Further, as also shown in Table 2, these stress levels are reduced by about a factor of two in the situation in which the glass sheet 212 has been laminated to the substrate 216 in the conventional laminated glass structure at +20°C at a relative humidity of 50%. While common measured glass strengths are on the order of 70 to 90 MPa for machined edges, and about 200 MPa for more expensive precision cutting methods, safety margins typically require that the glass strength is de-rated by factors of 5 to 10. Hence, usable glass strengths are typically on the order of 15 to 40 MPa and the results of Table 2 indicate that common environmental conditions subjected to conventional laminated glass structures processed under both extreme and common lamination conditions can lead to edgewise tensile stresses in the glass sheets 212 that exceed these strength values.

**Table 2**

| Substrate | Thickness (mm) | Max Edge Stress (MPa) [lamination at -40°C, 20% r.h.] | Max Edge Stress (MPa) [lamination at 20°C, 50% r.h.] |
|---|---|---|---|
| PMMA | 6 | + 341 | + 170.5 |
| PC | 6 | + 231 | + 115.5 |
| MDF | 12.7 | + 115 | + 57.5 |
| HPL | 8 | + 605 | + 302.5 |

Referring now to FIG. 2, an exemplary, laminated glass structure 100a is provided according to the first aspect of the invention. The laminated glass structure 100a includes a substrate 16 having upper and lower primary surfaces 8, 6; a flexible glass sheet 12; a buffer layer 44; a first adhesive 22; and a second adhesive 24. The substrate 16, flexible glass sheet 12, buffer layer 44, first adhesive 22 and second adhesive 24 possess thicknesses 116, 112, 144, 122 and 124, respectively. Further, the laminated glass structure 100a has a total thickness 150a. The buffer layer 44 is laminated to the substrate 16 with the first adhesive 22. The flexible glass sheet 12 is laminated to the buffer layer 44 with the second adhesive 24.

In the laminated glass structure 100a depicted in FIG. 2, the substrate 16 has a thickness 116 from about 2.5 mm to about 50 mm and primary surfaces 6, 8. The buffer layer 44 has a thickness 144 from about 0.1 mm to about 2.5 mm. The flexible glass sheet 12 has a thickness 112 of no greater than 0.3 mm. Further, the buffer layer 44 is characterized by an elastic modulus of at least 70 GPa and a coefficient of thermal expansion between about 4 and 25 ppm*°C$^{-1}$.

Referring again to FIG. 2, the buffer layer 44 of the laminated glass structure 100a provides mechanical resistance against the expansion and contraction of the substrate 16. As configured in the laminated glass structure 100a, the buffer layer 44 acts to mitigate undesirable strains of the substrate 16 and thereby reduces stresses and bowing in the flexible glass sheet 12. More particularly, the mechanical resistance offered by the buffer layer 44 minimizes the magnitude of the compressive and tensile stresses realized in the flexible glass sheet 12 upon the expansion of the substrate 16, e.g., from moisture ingress and/or temperature increases. In general, buffer layers 44 with higher elastic moduli and/or thicknesses tend to further reduce these stress magnitudes in the flexible glass sheet 12 as compared to buffer layers 44 with lower elastic moduli and/or thicknesses employed in the laminated glass structure 100a depicted in FIG. 2. Nevertheless, certain applications of the laminated glass structures 100a place restrictions on the overall stack thickness 150a, which can limit the potential thickness of the buffer layer 44. In such embodiments, significant reductions in the stresses exhibited by the flexible glass sheet 12 can be obtained through elastic modulus increases in the buffer layer 44. More generally, preferred buffer layers 44 have a thickness 144 from about 0.5 to 1.5 mm, an elastic modulus greater than that of the glass sheet (e.g., greater than or equal to 70 GPa), a coefficient of thermal expansion (CTE) that is about the same, or within the same order of magnitude, as that of glass, and little to no dimensional changes associated with changes in relative humidity. Accordingly, certain aspects of the laminated glass structures of the disclosure employ a buffer layer 44 (or multiple buffer layers) that is relatively stiff with minimal deformation upon the application of stress.

Within the laminated glass structure 100a depicted in FIG. 2, the substrate 16 can be fabricated from non-glass materials, many of which are hygroscopic and/or susceptible to containing volatiles after manufacturing. Particular examples of the material employed in the substrate 16 include but are not limited to wood, fiberboard, drywall, laminate, composite, polymeric, metal, metal alloy and/or stone materials. The metal alloys include but are not limited to stainless steel, aluminum, nickel, magnesium, brass, bronze, titanium, tungsten, copper, cast iron, ferrous steels, and noble metals. The substrate 16 may also include glass, glass-ceramic and/or ceramic materials as secondary constituents, e.g., fillers. In some embodiments, the substrate 16 includes polymer, wood or wood-based products such as chipboard, particleboard, fiberboard, cardboard, hardboard, or paper. For example, the substrate 16 can comprise a low pressure laminate (LPL), a high pressure laminate (HPL), medium density fiberboard (MDF) and/or a veneer. In other aspects of the disclosure, the substrate 16 is selected from the foregoing materials to provide support for the flexible glass sheet 12 and/or to provide a suitable structure for the installation of connectors and other hardware to mount the laminated glass structure 100a to a wall, ceiling or other application-oriented fixture.

As also depicted in FIG. 2, the substrate 16 has a thickness 116 within the laminated glass structure 100a. The thickness 116 ranges from about 2.5 mm to about 50 mm and, preferably, from about 2.5 mm to about 25 mm. In certain other aspects, the thickness 116 of the substrate 16 ranges from about 2.5 mm to about 15 mm. For example, the thickness 116 can be about 2.5 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 35 mm, 40 mm, 45 mm, 50 mm, and all thickness values between these thicknesses.

According to some embodiments of the laminated glass structure 100a, each of the primary surfaces 6, 8 has a surface area of at least 1 $m^2$, at least 2 $m^2$, at least 3 $m^2$, at least 4 $m^2$, or at least 5 $m^2$. In other embodiments, the primary surfaces 6, 8 of the laminated structure 100a area of less than or equal to 1 $m^2$. For example, the laminated structure 100a can possess primary surfaces 6, 8, each with a surface area less than or equal to 1 $m^2$ as the result of being sectioned from a larger laminated glass structure (i.e., with a surface area $\geq$ 1 $m^2$). As another example, the laminated structure 100a can possess primary surfaces 6, 8, each with a surface area of less than or equal to 1 $m^2$, as directly manufactured in this form.

In certain embodiments of the laminated glass structure 100a depicted in FIG. 2, the substrate 16 may be formed using a polymer material, for example, any one or more of polyethylene teraphthalate (PET), polyethylene Naphthalate (PEN), ethylene tetrafluoroethylene (ETFE), or thermopolymer polyolefin (TPO™ - polymer/filler blends of polyethylene, polypropylene, block copolymer polypropylene (BCPP), or rubber), polyesters, polycarbonate, polyvinylbuterate, polyvinyl chloride, polyethylene and substituted polyethylenes, polyhydroxybutyrates, polyhydroxyvinylbutyrates, polyetherimides, polyamides, polyethylenenaphalate, polyimides, polyethers, polysulphones, polyvinylacetylenes, transparent thermoplastics, transparent polybutadienes, polycyanoacrylates, cellulose-based polymers, polyacrylates and polymethacrylates, polyvinylalcohol, polysulphides, polyvinyl butyral, polymethyl methacrylate and polysiloxanes. It is also possible to use polymers which can be deposited and/or coated as pre-polymers or pre-compounds and then converted, such as epoxy-resins, polyurethanes, phenol-formaldehyde resins, and melamine-formaldehyde resins. Many display and electrical applications may prefer acrylic-based polymers, silicones and such structural aiding layers, for example, commercially available SentryGlas® from DuPont. The polymer layers may be transparent for some applications, but need not be for other applications.

In certain aspects of the laminated glass structures 100a (i.e., as configured to enhance the mechanical resistance in the flexible glass sheet 12), a substrate 16 is employed in the structure that is characterized by a total environmental strain, $\Delta\varepsilon$, that is at least two times greater than the total environmental strain, $\Delta\varepsilon$, of the glass sheet 12 under the same environmental conditions. For example, such an environmental condition may involve a temperature increase from -40°C to +60°C and a relative humidity increase from 20% to 80% at +20°C, as measured on the glass sheet 12 and the substrate 16 in a non-laminated condition. Still further, certain aspects of the laminated glass structure 100a employ a substrate 16 that can be characterized by a total environmental strain, $\Delta\varepsilon$, of about 0.2% or greater, the environmental strain resulting from a temperature increase from -40°C to +60°C and a relative humidity increase from 20% to 80% at +20°C on the substrate in a non-laminated condition.

Referring again to FIG. 2, the flexible glass sheet 12 may be formed of glass, a glass ceramic, a ceramic material or composites thereof. A fusion process (e.g., a downdraw process) that forms high quality flexible glass sheets can be used in a variety of devices, and one such application is flat panel displays. Glass sheets produced in a fusion process have surfaces with superior flatness and smoothness when compared to glass sheets produced by other methods. The fusion process is described in U.S. Patent Nos. 3,338,696 and 3,682,609. Other suitable glass sheet forming methods include a float process, updraw and slot draw methods. Additionally, the flexible glass sheet 12 may also contain anti-microbial properties by using a chemical composition for the glass that includes, or otherwise incorporates, a silver ion concentration on the surface of the glass sheet, for example, in the range from greater than 0 to 0.047 $\mu g/cm^2$, as further described in U.S. Patent Application Publication No. 2012/0034435. The flexible glass sheet 12 may also be coated with a glaze composed of silver, or otherwise doped with silver ions, to gain the desired anti-microbial properties, as further described in U.S. Patent Application Publication No. 2011/0081542. Additionally, the flexible glass sheet 12 may have a molar composition of 50% $SiO_2$, 25% CaO, and 25% $Na_2O$ to achieve the desired anti-microbial properties.

As depicted in FIG. 2, the flexible glass sheet 12 of the laminated glass structure 100a has a thickness 112. The thickness 112 of the flexible glass sheet 12 is about 0.3 mm or less including but not limited to thicknesses of, for example, about 0.01-0.05 mm, about 0.05-0.1 mm, about 0.1-0.15 mm, about 0.15-0.3 mm, or about 0.1 to about 0.2 mm. The thickness 112 of the flexible glass sheet 12 can also be about 0.3 mm, 0.275 mm, 0.25 mm, 0.225 mm, 0.2 mm, 0.19 mm, 0.18 mm, 0.17 mm, 0.16 mm, 0.15 mm, 0.14 mm, 0.13 mm, 0.12 mm, 0.11 mm, 0.10 mm, 0.09 mm, 0.08 mm, 0.07 mm, 0.06 mm, 0.05 mm, 0.04 mm, 0.03 mm, 0.02 mm, 0.01 mm, or any thickness value between these thicknesses.

As further depicted in FIG. 2, the laminated glass structure 100a includes a first adhesive 22 that is employed to laminate the buffer layer 44 to the upper primary surface 8 of the substrate 16. Further, the laminated glass structure 100a includes a second adhesive 24 that is employed to laminate the flexible glass sheet 12 to the buffer layer 44. Each of the adhesives 22, 24 may be an adhesive, a sheet or film of adhesive, a liquid adhesive, a powder adhesive, a pressure sensitive adhesive, an ultraviolet-light curable adhesive, a thermally curable adhesive, or other similar adhesive or combination thereof. The adhesives 22, 24 may also assist in attaching the flexible glass sheet 12 to the substrate 16 during lamination. Some examples of low temperature adhesive materials include Norland Optical Adhesive 68 (Norland Products, Inc.) cured by ultra-violet (UV) light, FLEXcon V29TT adhesive, 3M™ optically clear adhesive (OCA) 8211, 8212, 8214, 8215, 8146, 8171, and 8172 (bonded by pressure at room temperature or above), 3M™ 4905 tape, Opti-Clear® adhesive, silicones, acrylates, optically clear adhesives, encapsulant material, polyurethane polyvinylbutyrates, ethylenevinylacetates, ionomers, and wood glues. Typical graphic adhesives such as Graphicmount and Facemount may also be used (as available from LexJet Corporation, located in Sarasota, Florida, for example). Some examples of higher temperature adhesive materials include DuPont SentryGlas®, DuPont PV 5411, Japan World Corporation material FAS and polyvinyl butyral resin.

Each of the adhesives 22, 24 may be thin, having thicknesses 122, 124 of less than or equal to about 1000 $\mu m$, including less than or equal to about 500 $\mu m$, less than or equal to about 250 $\mu m$, less than or equal to about 50 $\mu m$, less than or equal to 40 $\mu m$, and less than or equal to about 25 $\mu m$. In other aspects, the thicknesses 122, 124 of the respective adhesives 22, 24 are between about 0.1 mm and about 5 mm. As also understood by those with ordinary skill in the field, the thicknesses 122, 124 of the adhesives 22, 24 can be substantially the same or, in certain aspects, they may be dissimilar. The adhesives 22, 24 may also contain other functional components such as color, decoration, heat or UV resistance, AR filtration, etc. The adhesives 22, 24 may be optically clear on cure, or may otherwise be opaque. For those embodiments in which the adhesive 24 is a sheet or film of adhesive, the adhesive 24 may have a decorative pattern or design that is visible through the thickness 112 of the flexible glass sheet 12. Similarly, to the extent that the substrate 16 has clarity, the adhesive 22 may also have a decorative pattern or design that is visible through the thickness 116 of the substrate 16.

As also depicted in FIG. 2, the adhesives 22, 24 of the laminated glass structure 100a can be formed of a liquid, gel, sheet, film or a combination of these forms. Further, in some aspects, the adhesives 22, 24 can exhibit a pattern of stripes that are visible from an outer surface of the flexible glass sheet 12 and/or substrate 16, provided that it has sufficient optical clarity. In some embodiments, the substrate 16 and/or the flexible glass sheet 12 may include a decorative pattern. In some embodiments, the decorative pattern may be provided within multiple layers, e.g., within the flexible glass sheet 12, substrate 16 and/or adhesives 22, 24.

As noted earlier, the laminated glass structure 100a depicted in FIG. 2 includes a buffer layer 44. The buffer layer 44 is disposed between the substrate 16 and the flexible glass sheet 12. Further, the buffer layer 44 is laminated to the substrate 16 by the first adhesive 22 and laminated to the flexible glass sheet 12 by the second adhesive 24. The buffer layer 44 possesses an elastic modulus greater than that of the glass sheet (e.g., greater than or equal to 70 GPa), a coefficient of thermal expansion (CTE) that is about the same, or within the same order of magnitude, as that of glass, and preferably little to no dimensional changes associated with changes in relative humidity. With particular regard to the dimensions of the buffer layer 44, the thickness 144 is from about 0.1 to 2.5 mm, and preferably set between about 0.5 mm and about 1.5 mm. Accordingly, the thickness 144 of the buffer layer 44 can be 0.1 mm, 0.2 mm, 0.3 mm, 0.4 mm. 0.5 mm, 0.6 mm, 0.7 mm, 0.8 mm, 0.9 mm, 1.0 mm, 1.1 mm, 1.2 mm, 1.3 mm, 1.4 mm, 1.5 mm, 2 mm, 2.5 mm, and all thicknesses between these thickness values.

In the laminated glass structure 100a depicted in FIG. 2, the buffer layer 44 employed in the laminated glass structure 100a is configured with an elastic modulus that exceeds that of the flexible glass sheet 12, e.g., greater than or equal to 70 GPa. In some embodiments, the buffer layer can have an elastic modulus that exceeds 100 GPa, 150 GPa, or even 200 GPa. Accordingly, the buffer layer 44 can have an elastic modulus of 70 GPa, 80 GPa, 90 GPa, 100 GPa, 110 GPa, 120 GPa, 130 GPa, 140 GPa, 150 GPa, 160 GPa, 170 GPa, 180 GPa, 190 GPa, 200 GPa, and all values between these elastic moduli.

In the laminated glass structure 100a depicted in FIG. 2, the buffer layer 44 has a CTE that is relatively close to that of glass, below 25 ppm*°C$^{-1}$ and above 4 ppm*°C$^{-1}$. Accordingly, the CTE of the buffer layer 44 can be 4 ppm*°C$^1$, 5 ppm*°C$^{-1}$, 6 ppm*°C$^{-1}$, 7 ppm*°C$^{-1}$, 8 ppm*°C$^{-1}$, 9 ppm*°C$^{-1}$, 10 ppm*°C$^{-1}$, 11 ppm*°C$^{-1}$, 12 ppm*°C$^{-1}$, 13 ppm*°C$^{-1}$, 14 ppm*°C$^{-1}$, 15 ppm*°C$^{-1}$, 16 ppm*°C$^{-1}$, 17 ppm*°C$^1$ 18 ppm*°C$^{-1}$, 19 ppm*°C$^{-1}$, 20 ppm*°C$^{-1}$, 21 ppm*°C$^{-1}$, 22 ppm*°C$^{-1}$, 23 ppm*°C$^1$, 24 ppm*°C$^{-1}$, 25 ppm*°C$^1$, and all values between these CTE levels. In some embodiments, the CTE of the buffer layer 44 is between about 10 and 20 ppm*°C$^{-1}$ or between 10 and 15 ppm*°C$^{-1}$. With further regard to moisture sensitivity and expansivity, the buffer layer 44 is preferably resistant to moisture ingress and diffusivity such that its expansion is approximately zero when subjected to humidity changes, e.g., from 20% relative humidity to 80% relative humidity at 20°C. In other aspects of the laminated glass structure 100a, the buffer layer 44 can possess porosity and thus allow some moisture ingress, while maintaining resistance to expansion. Accordingly, certain natural and/or engineered materials with porosity are viable for the buffer layer 44 provided that they exhibit an effective elastic modulus that exceeds that of the flexible glass sheet 12.

Referring again to FIG. 2, the buffer layer 44 of the laminated glass structure 100a can be fabricated from various materials including, but not limited to, a metal, a metal alloy, a glass, a glass-ceramic, a ceramic, a composite (e.g., a ceramic matrix composite having alumina, silicon carbide, silicon nitride, carbon fibers and/or whiskers) and/or a combination of these materials. In general, however, many implementations of the laminated glass structure 100a should have a relatively high toughness, impact resistance and/or coefficient of thermal expansion. Table 3 below lists some exemplary materials for the buffer layer, along with their elastic modulus and coefficient of thermal expansion (CTE) values. Accordingly, certain implementations of the laminated glass structure 100a can employ buffer layers 44 fabricated from a glass, glass-ceramic, and/or a ceramic, provided that the material has enhanced fracture resistance (e.g., transformation-toughened zirconia). In an exemplary implementation, the buffer layer 44 is fabricated from a metal alloy, e.g., a common steel such as a stainless steel or a ferrous steel, a high-modulus aluminum alloy, a chromium-molybdenum steel, etc. One particular embodiment of the laminated glass structure 100a employs a buffer layer 44 fabricated from a stainless steel, which provides corrosion resistance, along with reductions in the magnitude of the stresses developed in the flexible glass sheet 12 from expansion of the substrate 16. Another particular embodiment of the laminated structure 100a employs a buffer layer 44 fabricated from an aluminum metal sheet or foil.

**Table 3**

| Buffer layer material | E | CTE |
| --- | --- | --- |
| Stainless Steel | 200 GPa | 12 ppm/°C |
| Aluminum metal sheet/foil | 70 GPa | 23 ppm/°C |
| Brass | 105 GPa | 18 ppm/°C |
| Alumina | 350 GPa | 8 ppm/°C |
| Glass | 70 | 3-9 ppm/°C |

Referring again to FIG. 2, the overall thickness 150a of the laminated glass structure 100a can range from about 2.5 mm to about 55 mm. In particular, the overall thickness of the laminated glass structure 100a is given by the sum of the thicknesses 112, 116, 122, 124, and 144 of the flexible glass sheet 12, substrate 16, adhesives 22, 24 and buffer layer 44, respectively. Accordingly, the overall thickness of the laminated glass structure 100a can be about 2.5 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 40 mm, 45 mm, 50 mm, 55 mm and all thickness values between these overall thicknesses.

In certain aspects, the overall thickness of the laminated glass structure 100a can range from about 4 mm to about 25 mm.

Referring now to FIG. 3, an exemplary, laminated glass structure 100b is provided according to the second aspect of the invention. Unless otherwise noted, the laminated glass structure 100b depicted in FIG. 3 has the same or similar features, capabilities, performance levels and requirements as the laminated glass structure 100a depicted in FIG. 2. Further, like-numbered elements in the laminated glass structures 100a and 100b have the same or similar structures and functions. As shown in FIG. 3, the laminated glass structure 100b includes a flexible glass sheet 12, substrate 16, adhesives 22, 24 and a buffer layer 40; and these same elements have thicknesses 112, 116, 122, 124 and 140, respectively. As also shown in FIG. 3, the buffer layer 40 is laminated to the substrate 16 at its lower primary surface 6 with the first adhesive 22. Further, the flexible glass sheet 12 is laminated to the substrate 16 at its upper primary surface 8 with the second adhesive 24. Unless otherwise noted, the buffer layer 40 employed in the laminated glass structure 100b can have the same properties, dimensions and characteristics of the buffer layer 44 employed in the laminated glass structure 100a (see FIG. 2). Accordingly, the overall stack thickness 150b of the laminated glass structure 100b can be the same or similar to the overall stack thickness 150a of the laminated glass structure 100a.

Referring again to FIG. 3, the buffer layer 40 of the laminated glass structure 100b, as configured on the back of the substrate 16, provides mechanical resistance against the expansion and contraction of the substrate 16. As configured in the laminated glass structure 100b, the buffer layer 40 acts to mitigate undesirable strains of the substrate 16 and thereby reduce stresses and bowing in the flexible glass sheet 12. In essence, the buffer layer 40 acts to pin or otherwise restrain the substrate 16 from dimensional changes upon exposure to environmental conditions that would otherwise cause it to expand, such as moisture ingress and/or temperature increases. Another benefit of the laminated glass structure 100b configuration depicted in FIG. 3 is that the buffer layer 40 can act to prevent moisture ingress into the substrate 16, provided that the buffer layer 40 is fabricated from a material with low or no moisture diffusivity (e.g., a stainless steel).

Similar to the laminated glass structure 100a (see FIG. 2), the mechanical resistance offered by the buffer layer 40 in the laminated glass structure 100b shown in FIG. 3 minimizes the magnitude of the compressive and tensile stresses realized in the flexible glass sheet 12 upon the expansion of the substrate 16, e.g., from moisture ingress and/or temperature increases. In general, buffer layers 40 with higher elastic moduli and/or thicknesses tend to further reduce these stress magnitudes in the flexible glass sheet 12 as compared to buffer layers 40 with lower elastic moduli and/or thicknesses. Nevertheless, certain applications of the laminated glass structures 100b place restrictions on the overall stack thickness 150b, which can limit the potential thickness of the buffer layer 40. In such embodiments, significant reductions in the stresses exhibited by the flexible glass sheet 12 can be obtained through elastic modulus increases in the buffer layer 40. The buffer layers 40 preferably have a thickness 140 from about 0.5 to 1.5 mm, have an elastic modulus greater than that of the glass sheet (e.g., greater than or equal to 70 GPa), have a coefficient of thermal expansion (CTE) that is about the same, or within the same order of magnitude, as that of glass, and preferably have little to no dimensional changes associated with changes in relative humidity.

Referring again to the buffer layers 40, 44 of the laminated glass structures 100a, 100b depicted in FIGS. 2 and 3, these layers can have the same dimensions, composition and thicknesses. In other implementations, the buffer layers 40, 44 have dissimilar compositions and/or thicknesses. The laminated glass structure 100b depicted in FIG. 3 can also require particular emphasis on the aesthetics and other surface characteristics of the buffer layer 40 given that it is located on one of the exterior surfaces of the overall laminated glass structure 100b. For example, the laminated glass structure 100b can be configured as a hanging wall panel that can be viewed from both sides. In other applications, the laminated glass structure 100b can be installed directly onto a wall. Accordingly, the selection of the composition and/or thickness 140 of the buffer layer 40 may also be governed by wear resistance, appearance, and/or on-site processing capability (e.g., ease of drilling when the buffer layer 40 is employed to directly mount the laminated glass structure 100b to another structure).

Referring now to FIG. 4, an exemplary, laminated glass structure 100c is provided according to the third aspect of the invention. Unless otherwise noted, the laminated glass structure 100c depicted in FIG. 4 has the same or similar features, capabilities, performance levels and requirements as the laminated glass structures 100a and 100b depicted in FIGS. 2-3. Further, like-numbered elements in the laminated glass structures 100a, 100b and 100c have the same or similar structures and functions. As shown in FIG. 4, the laminated glass structure 100c includes a flexible glass sheet 12, substrate 16, adhesives 22, 24, 26 and buffer layers 40, 44; and these same elements have thicknesses 112, 116, 122, 124, 126, 140 and 144, respectively. Unless otherwise noted, the third adhesive 26 employed in the laminated glass structure 100c can have the same or similar compositions, thickness and characteristics as the adhesives 22, 24 employed in the laminated glass structures 100a, 100b (see FIGS. 2-3). As also shown in FIG. 4, the lower buffer layer 40 is laminated to the substrate 16 at its lower primary surface 6 with the third adhesive 26. Further, the upper buffer layer 44 is laminated to the substrate 16 at its upper primary surface 8 with the first adhesive 22. In addition, the flexible glass sheet 12 is laminated to the upper buffer layer 44 by the second adhesive 24.

Unless otherwise noted, the lower and upper buffer layers 40, 44 employed in the laminated glass structure 100c depicted in FIG. 4 can have the same properties, dimensions and characteristics of the buffer layers 40, 44 employed in the laminated glass structures 100a and 100b (see FIGS. 2-3). Preferably, the lower and upper buffer layers 40, 44 of the laminated glass structure 100c have a total thickness (i.e., the sum of thicknesses 140 and 144) that is comparable to the thicknesses 140 and 144 of the buffer layers 40, 44 employed in the laminated glass structures 100a, 100b (see FIGS. 2-3). As such, each of the buffer layers 40, 44 employed in the laminated glass structure 100c has about half of the thickness 140, 144 of the comparable buffer layers 40, 44 employed in the laminated glass structures 100a, 100b (see FIGS. 2-3). In other implementations, the thicknesses 140, 144 of the buffer layers 40, 44 employed in the laminated glass structure 100c are dissimilar, such that one of the buffer layers is thicker than the other layer. In view of these considerations, the overall stack thickness 150c of the laminated glass structure 100c can be the same or similar to the overall stack thickness 150a, 150b of the laminated glass structures 100a, 100b.

Referring again to FIG. 4, the buffer layers 40, 44 of the laminated glass structure 100c, as laminated to the upper and lower primary surfaces 8, 6 of the substrate 16, provide mechanical resistance against the expansion and contraction of the substrate 16. As configured in the laminated glass structure 100c, the buffer layers 40, 44 act to mitigate undesirable strains of the substrate 16 and thereby reduce stresses and bowing in the flexible glass sheet 12. The buffer layers 40, 44 act to pin or otherwise restrain the substrate 16 from dimensional changes upon exposure to environmental conditions that would otherwise cause it to expand, such as moisture ingress and/or temperature increases. Another benefit of the laminated glass structure 100c configuration depicted in FIG. 4 is that the buffer layers 40, 44 can act to prevent moisture ingress into the substrate 16, provided that the buffer layers 40, 44 are fabricated from a material with low or no moisture diffusivity (e.g., a stainless steel).

Similar to the laminated glass structures 100a, 100b (see FIGS. 2-3), the mechanical resistance offered by the buffer layers 40, 44 in the laminated glass structure 100c shown in FIG. 4 minimizes the magnitude of the compressive and tensile stresses realized in the flexible glass sheet 12 upon the expansion of the substrate 16, e.g., from moisture ingress and/or temperature increases. In general, buffer layers 40, 44 with higher elastic moduli and/or thicknesses tend to further reduce these stress magnitudes in the flexible glass sheet 12 as compared to buffer layers 40, 44 with lower elastic moduli and/or thicknesses. Nevertheless, certain applications of the laminated glass structures 100c place restrictions on the overall stack thickness 150c, which can limit the potential thicknesses 140, 144 of the buffer layers 40, 44. In such embodiments, significant reductions in the stresses exhibited by the flexible glass sheet 12 can be obtained through elastic modulus increases in the buffer layers 40, 44. The buffer layers 40, 44 preferably have a total thickness (i.e., the sum of thicknesses 140 and 144) from about 0.5 to 1.5 mm, have an elastic modulus greater than that of the glass sheet (e.g., greater than or equal to 70 GPa), have a coefficient of thermal expansion (CTE) that is about the same, or within the same order of magnitude, as that of glass, and preferably have little to no dimensional changes associated with changes in relative humidity.

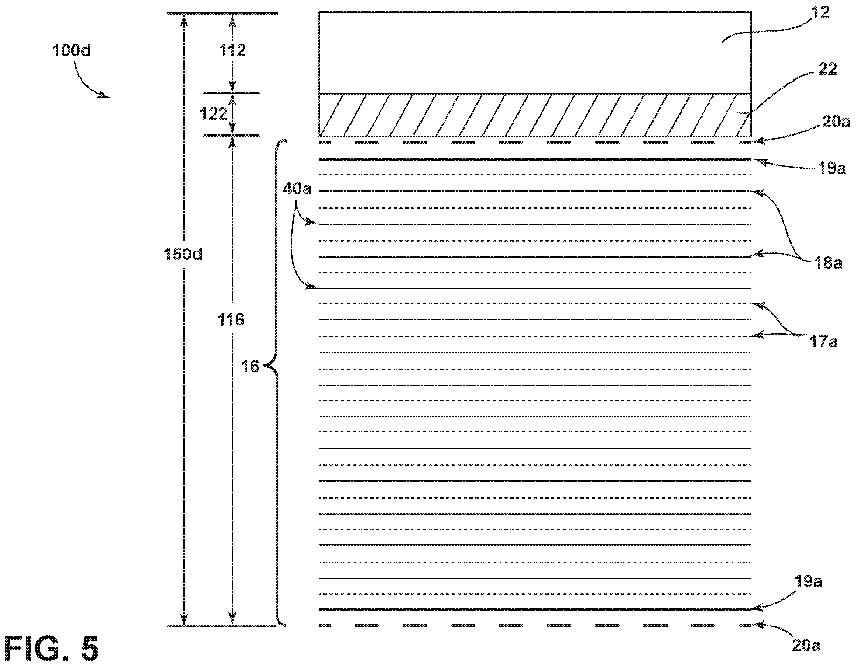

Referring now to FIG. 5, an exemplary, laminated glass structure 100d is provided according to an embodiment of the disclosure. Unless otherwise noted, the laminated glass structure 100d depicted in FIG. 5 has the same or similar features, capabilities, performance levels and requirements as the laminated glass structures 100a-c depicted in FIGS. 2-4. Further, like-numbered elements in the laminated glass structures 100a-c and 100d have the same or similar structures and functions. As shown in FIG. 5, the laminated glass structure 100d includes a flexible glass sheet 12, an adhesive 22 and a substrate 16; and these same elements have thicknesses 112, 122 and 116, respectively, along with a total thickness 150d. As also shown in FIG. 5, the flexible glass sheet 12 is laminated to the substrate 16 by the first adhesive 22.

Referring again to FIG. 5, the substrate 16 of the laminated glass structure 100d is substantially similar to the substrates 16 that are employed in the laminated glass structures 100a-c depicted FIGS. 2-4. For example, the substrate 16 employed in the laminated glass structure 100d can include, but is not limited to, low pressure laminate (LPL), a high pressure laminate (HPL), medium density fiberboard (MDF) and/or a veneer materials. Further, the substrate 16 employed in the laminated glass structure 100d includes a plurality of buffer foils 40a. In a preferred embodiment, the substrate 16 is fabricated from an HPL, as shown in exemplary form in FIG. 5. With regard to a laminated glass structure 100d with a substrate 16 having an HPL composition, the substrate generally includes multiple layers of craft paper 18a that are interleaved with sheets of phenolic resin 17a and the buffer foils 40a. Further, the substrate 16 includes one or more decorative paper layers 19a and one or more melamine protective layers 20a. Together, these layers are laminated together as an HPL for the substrate 16 of the laminated glass structure 100d shown in FIG. 5. It should also be understood that the flexible glass sheet 12 and the adhesive 22 can be laminated to either or both of the primary surfaces of the substrate 16. Further, the decorative paper layers 19a and melamine protective layer(s) 20a of the laminated glass structure 100d are optional; consequently, some or all of them may be included for aesthetic reasons and/or to protect the substrate 16 during shipment and during processes associated with laminating the glass sheet 12 to the substrate 16.

With particular regard to the buffer foils 40a of the laminated glass structure 100d shown in FIG. 5, these foils are similar in composition to the buffer layer or layers 40, 44 employed in laminated glass structures 100a-c depicted in FIGS. 2-4. That is, the buffer foils 40a can be fabricated from various materials including, but not limited to, a metal, a metal alloy, a glass, a glass-ceramic, a ceramic, a composite (e.g., a ceramic matrix composite having alumina, silicon carbide, silicon nitride, carbon fibers and/or whiskers) and/or a combination of these materials. In general, however, many implementations of the laminated glass structure 100d should have a relatively high toughness and/or impact resistance. Accordingly, certain implementations of the laminated glass structure 100d can employ buffer foils 40a fabricated from a glass, glass-ceramic, and/or a ceramic (e.g., alumina), provided that the material has enhanced fracture resistance (e.g., transformation-toughened zirconia). In an exemplary implementation, the buffer foils 40a are fabricated from a metal alloy, e.g., steel such as a stainless steel, brass or a ferrous steel, a high-modulus aluminum alloy, a chromium-molybdenum steel, etc.

Referring again to the buffer foils 40a of the laminated glass structure 100d shown in FIG.5, the foils 40a are characterized by smaller thicknesses than those of a given buffer layer 40, 44 (see FIGS. 2-4). However, as employed in the laminated glass structure 100d, the total thickness of the plurality of buffer foils 40a is given by the acceptable range of the thickness 140, 144 of the buffer layers 40, 44. That is the total thickness of the plurality of the buffer foils 40a can be from about 0.1 to 2.5 mm, and preferably set between about 0.5 mm and about 1.5 mm. Accordingly, the total thickness of the buffer foils 40a can be 0.1 mm, 0.2 mm, 0.3 mm, 0.4 mm. 0.5 mm, 0.6 mm, 0.7 mm, 0.8 mm, 0.9 mm, 1.0 mm, 1.1 mm, 1.2 mm, 1.3 mm, 1.4 mm, 1.5 mm, 2 mm, 2.5 mm, and all thicknesses between these thickness values. Furthermore, the individual thickness of each buffer foil 40a can range from about 0.01 mm to about 0.25 mm; consequently, the laminated glass structure 100d can employ a particular number of foils 40a to obtain a desired total buffer foil thickness between about 0.1 mm to about 2.5 mm. For example, ten (10) buffer foils 40a having an individual thickness of 50 $\mu$m can be interleaved within the substrate 16 to obtain a total buffer foil thickness of 0.5 mm. Similarly, twenty (20) buffer foils 40a having an individual thickness of 50 $\mu$m can be interleaved within the substrate 16 to obtain a total buffer foil thickness of 1 mm.

Referring again to the laminated glass structures 100d, as depicted in exemplary form in FIG. 5, these structures possess some or all of the advantages and benefits outlined earlier in connection with the laminated glass structures 100a-c (see FIGS. 2-4). Owing to their inclusion of a plurality of buffer foils 40a, the laminated structures 100d can be characterized by certain aesthetics that differ from those of the laminated structures 100a-c. In particular, the buffer foils 40a, with their relatively small thicknesses, can be configured within the substrate 16 such that they are invisible or virtually invisible from an edge-on view. Still further, the laminated glass structures 100d can be characterized by lower manufacturing costs in comparison to the other laminated glass structures 100a-c of the disclosure (see FIGS. 2-4). In particular, the smaller thicknesses associated with the plurality of buffer foils 40a facilitates the use of less intensive and lower cost machining techniques, such as conventional cutting and finishing tools (e.g., routers and table saws) typically used in the field of HPLs. In contrast, more intensive and higher cost machining techniques, such as water jet cutting, may be necessary to dimension and configure the edges of laminated glass structures 100a-c that include buffer layer(s) 40, 44 fabricated from relatively high modulus materials (e.g., stainless steel, alumina, etc.) with thicknesses in the range of 0.1 mm to about 2.5 mm. As such, the laminated glass structures 100d can possess aesthetic qualities and/or lower manufacturing costs of particular benefit to particular applications for these structures.

The laminated glass structures 100a, 100b, and 100c exhibit demonstrably improved stress states compared to conventional laminated glass structures in the face of environmental conditions that lead to expansion of the substrate (e.g., substrate 16) in these structures. These improvements can be estimated on a quantitative basis. As shown below in Equation (1), the total strain, $\varepsilon_o$, of the laminated glass structure can be defined as a function of the individual contributions from each of its key elements: the glass sheet $(_g)$, the buffer layer $(_b)$, and the substrate $(_s)$. More particularly, the individual strain contributions for these elements are: $\varepsilon_g$, $\varepsilon_b$, and $\varepsilon_s$; the individual elastic modulus contributions are: $E_g$, $E_b$ and $E_s$; and the individual thickness contributions are: $t_g$, $t_b$, and $t_s$.

$$\varepsilon_o = \varepsilon_g + \frac{\sigma_g}{E_g} = \varepsilon_b + \frac{\sigma_b}{E_b} = \varepsilon_s + \frac{\sigma_s}{E_s} \qquad (1)$$

Additionally, the laminated glass structure must be force-balanced between the three key elements (i.e., flexible glass sheet, buffer layer and substrate) such that the sum of the forces from each of the elements, $F_g$, $F_b$, and $F_s$, must equal zero as shown below in Equation (2).

$$F_g + F_b + F_s = 0 \qquad (2)$$

Equation (2) can be rearranged in terms of stress by substituting $\sigma_{[g, b, s]} t_{[g, b, s]}$ for each of the force terms, which results in the following relationship given by Equation (3).

$$\sigma_g t_g + \sigma_b t_b + \sigma_s t_s = 0 \qquad (3)$$

At this point, Equation (3) can be substituted into Equation (1) to yield Equation (4), which describes the stress ($\sigma_g$) at the edges of the flexible glass sheet 12 as a function of the various parameters in view of expansion of the substrate 16.

$$\sigma_g = \frac{t_b \varepsilon_b E_b + t_s \varepsilon_s E_s - t_b \varepsilon_g E_b - t_s \varepsilon_g E_s}{t_b \frac{E_b}{E_g} + t_s \frac{E_s}{E_g} + t_g} \tag{4}$$

Equation (4) can now be used to calculate the stress state in the flexible glass sheet 12 as a function of various parameters associated with the laminated glass structures 100a, 100b and 100c. As an example, Table 4 below shows the stress levels in the flexible glass sheet 12 of laminated glass structures 100a, 100b (see FIGS. 2-3) with a buffer layer 40 or 44 having the various listed thicknesses 140 or 144. In using Equation (4) to develop the estimates provided in Table 4, it was assumed that the buffer layer 40 or 44 has an elastic modulus of 200 GPa, a CTE of 12 ppm*°C$^{-1}$, and thicknesses 140 or 144 of 0 mm (no buffer layer), 0.5 mm, 1.0 mm and 1.5 mm. As is evident from Table 4, the use of a buffer layer 40 or 44 having increasingly greater thicknesses 140 or 144, dramatically reduces the stress range experienced by the flexible glass sheet 12 within the laminated glass structure 100a, 100b, thus improving its reliability against cracking and premature failure. Further, the results in Table 4 are applicable to the laminated glass structure 100c configuration (see FIG. 4), provided that the thicknesses of the buffer layer in Table 4 reflect the total thickness of the pair of buffer layers 40, 44.

**Table 4**

| Substrate | Substrate Thickness | Stress (MPa) | | | |
|---|---|---|---|---|---|
| | | 0 mm buffer | 0.5 mm buffer | 1.0 mm buffer | 1.5 mm buffer |
| PMMA | 6 mm | +341 | +134 | +104 | +94 |
| PC | 6 mm | +231 | +101 | +85 | +80 |
| MDF | 12.7 mm | +115 | +83 | +76 | +73 |
| HPL | 8 mm | +605 | +375 | +283 | +233 |

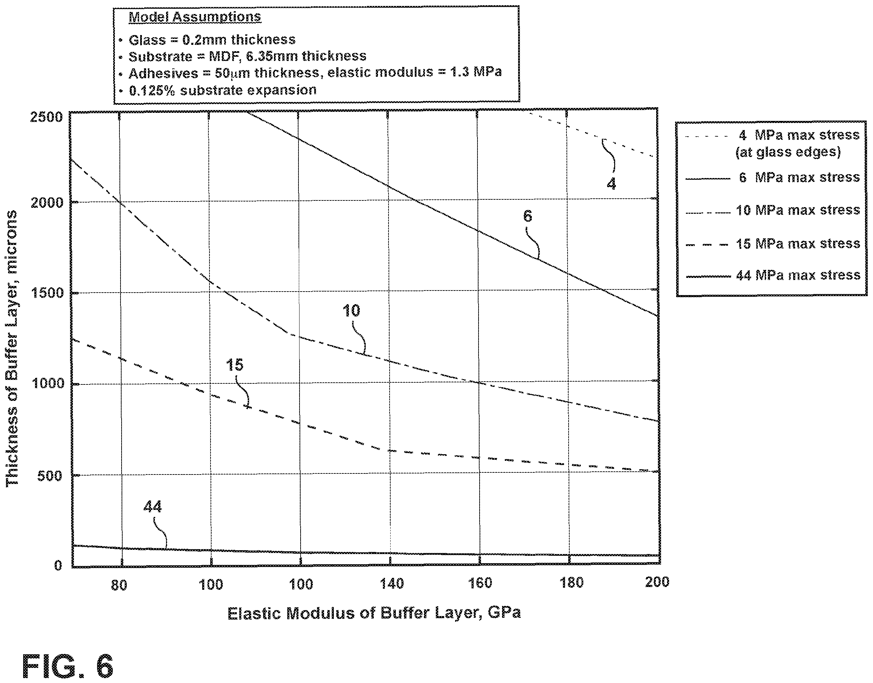

Finite element modeling approaches can also be used to demonstrate the effectiveness of the laminated glass structures 100a, 100b and 100c in reducing the stresses, particularly tensile stresses, observed in the flexible glass sheet 12 upon expansion of the substrate 16 from various environmental conditions. Such modeling can also be employed to optimize the properties and dimensions of the buffer layers 40, 44 employed in these laminated glass structures. The results of such a finite element model are shown in FIG. 6, namely a model showing the stress in the flexible glass sheet of a laminated glass structure (e.g., a laminated glass structure 100a, 100b or 100c as shown in FIGS. 2-4) as a function of buffer layer thickness and elastic modulus. In the model depicted in FIG. 6, the following assumptions were made: the flexible glass sheet (e.g., flexible glass sheet 12) has a thickness of 0.2 mm; the substrate is a medium density fiberboard (MDF) having a thickness of 6.35 mm, the pair of adhesives employed in the laminated glass structure each have a thickness of 50 microns and an elastic modulus of 1.3 MPa and the substrate is subjected to a 0.125% expansion based on an environmental condition. As demonstrated by FIG. 6, holding the buffer layer thickness constant at 1 mm (1000 microns) and increasing the elastic modulus of the buffer layer from about 95 GPa to 160 GPa results in a drop in tensile stress at the edges of the glass sheet from 15 MPa to 10 MPa. Similarly, holding the elastic modulus of the buffer layer constant at about 180 GPa and increasing the buffer layer thickness from about 0.55 mm to 1.6 mm results in a drop in tensile stress at the edges of the glass sheet from 15 MPa to about 6 MPa.

With regard to processing of the laminated glass structures 100a, 100b and 100c (see FIGS. 2-4), those with ordinary skill in the art can readily appreciate that various lamination methods can be employed to fabricate these structures. For example, high pressure and low pressure lamination approaches can be employed that are comparable to those typically used with conventional laminates, depending on the composition of the substrate 16 and other elements of the laminated glass structures 100a-100c. In certain embodiments of the methods employed to fabricate the laminated glass structures 100a, 100b and 100c, various surface treatments (e.g., plasma cleaning, etching, polishing and others) can be applied to the buffer layers 40 and/or 44 to facilitate improved lamination of these layers with the adhesives 22, 24 and/or 26, and the substrate 16 and/or flexible glass sheet 12.

**Claims**

**1.** A laminated glass structure, comprising:

a substrate (16) having a thickness from 2.5 mm to 50 mm and primary surfaces;
a buffer layer (44) having a thickness from 0.1 mm to 2.5 mm, an elastic modulus of at least 70 GPa and a coefficient of thermal expansion between 4 and 25 ppm*°C$^{-1}$ laminated to the substrate with a first adhesive (22); and
a flexible glass sheet (12) having a thickness of no greater than 0.3 mm laminated to the buffer layer with a second adhesive (24); and wherein the buffer layer (44) comprises a metal alloy; or the substrate (16) comprises a material selected from the group consisting of a polymer, a wood, a low pressure laminate (LPL), a high pressure laminate (HPL), a melamine-containing laminate, a particle-reinforced board, a fiber-reinforced board, and a medium density fiberboard (MDF).

**2.** The structure according to claim 1, wherein the buffer layer (44) is further **characterized by** an elastic modulus of at least 150 GPa, a thickness from 0.5 mm to 1.5 mm and a coefficient of thermal expansion between 10 and 20 ppm*°C$^{-1}$.

**3.** The structure according to claim 1 or claim 2, wherein the buffer layer (44) comprises an upper buffer layer laminated to the flexible glass sheet and a lower buffer layer laminated to the substrate.

**4.** A laminated glass structure, comprising:

a substrate (16) having a thickness from 2.5 mm to 50 mm and primary surfaces;
a buffer layer (40) having a thickness from 0.1 mm to 2.5 mm, an elastic modulus of at least 70 GPa and a coefficient of thermal expansion between 4 and 25 ppm*°C$^{-1}$ laminated to the substrate with a first adhesive (22); and
a flexible glass sheet (12) having a thickness of no greater than 0.3 mm laminated to the substrate with a second adhesive (24).

**5.** The structure according to claim 4, wherein the substrate (16) comprises a material selected from the group consisting of a polymer, a wood, a low pressure laminate (LPL), a high pressure laminate (HPL), a melamine-containing laminate, a particle-reinforced board, a fiber-reinforced board, and a medium density fiberboard (MDF).

**6.** A laminated glass structure comprising:

a substrate (16) having a thickness from 2.5 mm to 50 mm, an upper primary surface (8) and a lower primary surface (6);
an upper buffer layer (44) laminated to the upper primary surface (8) with a first primary adhesive (22);
a flexible glass sheet (12) having a thickness of no greater than 0.3 mm laminated to the upper buffer layer with a second adhesive (24); and a lower buffer layer (40) laminated to the lower primary surface (6) of the substrate with a third adhesive (26),
wherein the buffer layers have a total thickness from 0.1 mm to 2.5 mm, and each buffer layer is further **characterized by** an elastic modulus of at least 70 GPa and a coefficient of thermal expansion between 4 and 25 ppm*°C$^{-1}$.

**7.** The structure according to claim 6, wherein the buffer layers have substantially the same composition and thicknesses.

**8.** The structure according to claim 6, wherein the buffer layers have at least one of different compositions and different thicknesses.

**Patentansprüche**

**1.** Laminierte Glasstruktur, umfassend:

ein Substrat (16), das eine Dicke von 2,5 mm bis 50 mm und Primärflächen aufweist;

eine Pufferschicht (44), die eine Dicke von 0,1 mm bis 2,5 mm, einen Elastizitätsmodul von mindestens 70 GPa und einen Wärmeausdehnungskoeffizienten zwischen 4 und 25 ppm*°C$^{-1}$ aufweist und mit einem ersten Klebstoff (22) auf das Substrat laminiert ist; und

eine flexible Glasscheibe (12), die eine Dicke von nicht mehr als 0,3 mm aufweist und mit einem zweiten Klebstoff (24) auf die Pufferschicht laminiert ist; und

wobei die Pufferschicht (44) eine Metalllegierung umfasst; oder

das Substrat (16) ein Material umfasst, das aus der Gruppe bestehend aus einem Polymer, einem Holz, einem Niederdrucklaminat (LPL), einem Hochdrucklaminat (HPL), einem melaminhaltigen Laminat, einer partikelverstärkten Platte, einer faserverstärkten Platte und einer Faserplatte mittlerer Dichte (MDF) ausgewählt ist.

2. Struktur nach Anspruch 1, wobei die Pufferschicht (44) ferner durch einen Elastizitätsmodul von mindestens 150 GPa, eine Dicke von 0,5 mm bis 1,5 mm und einen Wärmeausdehnungskoeffizienten zwischen 10 und 20 ppm*°C$^{-1}$ gekennzeichnet ist.

3. Struktur nach Anspruch 1 oder Anspruch 2, wobei die Pufferschicht (44) eine obere Pufferschicht, die auf die flexible Glasscheibe laminiert ist, und eine untere Pufferschicht umfasst, die auf das Substrat laminiert ist.

4. Laminierte Glasstruktur, umfassend:

ein Substrat (16), das eine Dicke von 2,5 mm bis 50 mm und Primärflächen aufweist;

eine Pufferschicht (40), die eine Dicke von 0,1 mm bis 2,5 mm, einen Elastizitätsmodul von mindestens 70 GPa und einen Wärmeausdehnungskoeffizienten zwischen 4 und 25 ppm*°C$^{-1}$ aufweist und mit einem ersten Klebstoff (22) auf das Substrat laminiert ist; und

eine flexible Glasscheibe (12), die eine Dicke von nicht mehr als 0,3 mm aufweist und mit einem zweiten Klebstoff (24) auf das Substrat laminiert ist.

5. Struktur nach Anspruch 4, wobei das Substrat (16) ein Material umfasst, das aus der Gruppe bestehend aus einem Polymer, einem Holz, einem Niederdrucklaminat (LPL), einem Hochdrucklaminat (HPL), einem melaminhaltigen Laminat, einer partikelverstärkten Platte, einer faserverstärkten Platte und einer Faserplatte mittlerer Dichte (MDF) ausgewählt ist.

6. Laminierte Glasstruktur, umfassend:

ein Substrat (16), das eine Dicke von 2,5 mm bis 50 mm, eine obere Primärfläche (8) und eine untere Primärfläche (6) aufweist;

eine obere Pufferschicht (44), die mit einem ersten Primärklebstoff (22) auf die obere Primärfläche (8) laminiert ist;

eine flexible Glasscheibe (12), die eine Dicke von nicht mehr als 0,3 mm aufweist und mit einem zweiten Klebstoff (24) auf die obere Pufferschicht laminiert ist; und eine untere Pufferschicht (40), die mit einem dritten Klebstoff (26) auf die untere Primärfläche (6) des Substrats laminiert ist;

wobei die Pufferschichten eine Gesamtdicke von 0,1 mm bis 2,5 mm aufweisen und jede Pufferschicht ferner durch einen Elastizitätsmodul von mindestens 70 GPa und einen Wärmeausdehnungskoeffizienten zwischen 4 und 25 ppm*°C$^{-1}$ gekennzeichnet ist.

7. Struktur nach Anspruch 6, wobei die Pufferschichten im Wesentlichen die gleiche Zusammensetzung und Dicke aufweisen.

8. Struktur nach Anspruch 6, wobei die Pufferschichten mindestens eine von unterschiedlichen Zusammensetzungen und unterschiedlichen Dicken aufweisen.

**Revendications**

1. Structure en verre feuilleté, comprenant :

un substrat (16) possédant une épaisseur allant de 2,5 mm à 50 mm et des surfaces primaires ;

une couche tampon (44) possédant une épaisseur allant de 0,1 mm à 2,5 mm, un module d'élasticité supérieur ou égal à 70 GPa et un coefficient de dilatation thermique compris entre 4 et 25 ppm*°C$^{-1}$ stratifiée sur le substrat avec un premier adhésif (22) ; et

une feuille de verre souple (12) possédant une épaisseur inférieure ou égale à 0,3 mm stratifiée sur la couche tampon avec un deuxième adhésif (24) ; et

ladite couche tampon (44) comprenant un alliage métallique ; ou

ledit substrat (16) comprenant un matériau choisi dans le groupe constitué par un polymère, un bois, un stratifié basse pression (LPL), un stratifié haute pression (HPL), un stratifié contenant de la mélamine, un panneau renforcé par des particules, un panneau renforcé par des fibres et un panneau de fibres de densité moyenne (MDF).

2. Structure selon la revendication 1, ladite couche tampon (44) étant en outre **caractérisée par** un module d'élasticité supérieur ou égal à 150 GPa, une épaisseur allant de 0,5 mm à 1,5 mm et un coefficient de dilatation thermique compris entre 10 et 20 ppm*°C$^{-1}$.

3. Structure selon la revendication 1 ou la revendication 2, ladite couche tampon (44) comprenant une couche tampon supérieure stratifiée sur la feuille de verre souple et une couche tampon inférieure stratifiée sur le substrat.

4. Structure en verre feuilleté, comprenant :

un substrat (16) possédant une épaisseur allant de 2,5 mm à 50 mm et des surfaces primaires ;

une couche tampon (40) possédant une épaisseur allant de 0,1 mm à 2,5 mm, un module d'élasticité supérieur ou égal à 70 GPa et un coefficient de dilatation thermique compris entre 4 et 25 ppm*°C$^{-1}$ stratifiée sur le substrat avec un premier adhésif (22) ; et

une feuille de verre souple (12) possédant une épaisseur inférieure ou égale à 0,3 mm stratifiée sur le substrat avec un deuxième adhésif (24).

5. Structure selon la revendication 4, ledit substrat (16) comprenant un matériau choisi dans le groupe constitué par un polymère, un bois, un stratifié basse pression (LPL), un stratifié haute pression (HPL), un stratifié contenant de la mélamine, un panneau renforcé par des particules, un panneau renforcé par des fibres et un panneau de fibres de densité moyenne (MDF).

6. Structure en verre feuilleté comprenant :

un substrat (16) possédant une épaisseur allant de 2,5 mm à 50 mm, une surface primaire supérieure (8) et une surface primaire inférieure (6) ;

une couche tampon supérieure (44) stratifiée sur la surface primaire supérieure (8) avec un premier adhésif primaire (22) ;

une feuille de verre souple (12) possédant une épaisseur inférieure ou égale à 0,3 mm stratifiée sur la couche tampon supérieure avec un deuxième adhésif (24) ; et une couche tampon inférieure (40) stratifiée sur la surface primaire inférieure (6) du substrat avec un troisième adhésif (26),

lesdites couches tampons possédant une épaisseur totale allant de 0,1 mm à 2,5 mm, et chaque couche tampon étant en outre **caractérisée par** un module d'élasticité supérieur ou égal à 70 GPa et un coefficient de dilatation thermique compris entre 4 et 25 ppm*°C$^{-1}$.

7. Structure selon la revendication 6, lesdites couches tampons possédant sensiblement la même composition et les mêmes épaisseurs.

8. Structure selon la revendication 6, lesdites couches tampons possédant au moins l'une des compositions différentes et des épaisseurs différentes.

**FIG. 1**

**FIG. 1A**

212

214

214

202, distance along short axis through center of laminate

# FIG. 1B

214

212

214

202, distance along short axis through center of laminate

# FIG. 1C

**FIG. 2**

**FIG. 3**

**FIG. 4**

FIG. 5

EP 3 463 864 B1

**FIG. 6**

EP 3 463 864 B1

**REFERENCES CITED IN THE DESCRIPTION**

**Patent documents cited in the description**

- US 4427743 A
- US 3338696 A
- US 3682609 A
- US 20120034435
- US 20110081542